# EUROPÄISCHE PATENTANMELDUNG

(11) **EP 3 872 582 A1**
(43) Veröffentlichungstag der Anmeldung: **01.09.2021**
(21) Anmeldenummer: 20159520.4
(22) Anmeldetag: 26.02.2020
(51) Int. Cl.: G05B 9/03

(54) **REDUNDANT AUSGELEGTES AUTOMATISIERUNGSSYSTEM**

(71) Anmelder: Siemens Aktiengesellschaft, 80333 München (DE)
(72) Erfinder: Graf, Rene, 90513 Zirndorf (DE); Steinhauer, Guido, 76744 Büchelberg (DE)

(57) **Zusammenfassung**

Die Erfindung betrifft ein redundant ausgelegtes Automatisierungssystem (1), welches ein erstes Teilsystem (2) und ein zweites Teilsystem (3) aufweist, wobei eines dieser Teilsysteme (2, 3) dazu ausgebildet ist, als Master zu arbeiten und das andere dieser Teilsysteme (2, 3) dazu ausgebildet ist, als Slave zu arbeiten, und wobei der Slave dazu ausgebildet ist, für den Fall, dass der Master ausfällt, die Funktion des Masters zu übernehmen, wobei in den beiden Teilsystemen (2, 3) des Automatisierungssystems (1) jeweils ein Ablaufprogramm implementiert ist, das in einer Laufzeitumgebung (10, 12) ausführbar ist, um Automatisierungsaufgaben zu erfüllen, und wobei in den beiden Teilsystemen (2, 3) des Automatisierungssystems (1) jeweils ein Datenspeicher implementiert ist, wobei das Ablaufprogramm wenigstens ein erstes Teilprogramm (11a, 13a, 11b, 13b, 11c, 13c) und ein zweites Teilprogramm (11a, 13a, 11b, 13b, 11c, 13c) aufweist, und wobei der Datenspeicher jeweils wenigstens einen ersten Teilspeicher (14a, 15a, 14b, 15b, 14c, 15c) und einen zweiten Teilspeicher (14a, 15a, 14b, 15b, 14c, 15c) aufweist. Es ist dadurch gekennzeichnet, dass dem ersten Teilprogramm (11a, 13a, 11b, 13b, 11c, 13c) der erste Teilspeicher (14a, 15a, 14b, 15b, 14c, 15c) und dem zweiten Teilprogramm (11a, 13a, 11b, 13b, 11c, 13c) der zweite Teilspeicher (14a, 15a, 14b, 15b, 14c, 15c) zugeordnet ist, und dass sich ein Synchronisationstakt des ersten Teilprogramms (11a, 13a, 11b, 13b, 11c, 13c) und des ersten Teilspeichers (14a, 15a, 14b, 15b, 14c, 15c) von einem Synchronisationstakt des zweiten Teilprograms (11a, 13a, 11b, 13b, 11c, 13c) und des zweiten Teilspeichers (14a, 15a, 14b, 15b, 14c, 15c) unterscheidet.

## Beschreibung

Die Erfindung betrifft ein redundant ausgelegtes Automatisierungssystem mit einem ersten und einem zweiten Teilsystem versehenen Automatisierungssystems, wobei eines dieser Teilsysteme als Master und das andere Teilsystem als Slave arbeitet und wobei für den Fall, dass der Master ausfällt, der Slave die Funktion des Masters übernimmt, gemäß Anspruch 1. Darüber hinaus betrifft die Erfindung ein Verfahren zum Betreiben eines redundant ausgelegten Automatisierungssystems, welches ein erstes Teilsystem und ein zweites Teilsystem aufweist, wobei eines dieser Teilsysteme als Master und das andere dieser Teilsysteme als Slave arbeitet und wobei für den Fall, dass der Master ausfällt, der Slave die Funktion des Masters übernimmt, gemäß Anspruch 6.

Im Automatisierungsumfeld werden verstärkt hochverfügbare Lösungen (H-Systeme) gefordert, welche geeignet sind, eventuell auftretende Stillstandszeiten einer technischen Anlage auf ein Minimum zu reduzieren. Vor allem in bestimmten kritischen Bereichen, wie z.B. Kraftwerken oder Chemieanlagen, wird die dort verwendete Steuerungstechnik in der Regel redundant ausgelegt, um bei Ausfall eines Systems den sicheren Betrieb der Anlage gewährleisten zu können. Dem entsprechend sind in solchen Fällen auch Peripherie-Komponenten und Netzwerke vollständig oder wenigstens teilweise redundant aufgebaut.

Redundante Steuerungen bestehen aus zwei identischen Einzelsteuerungen. Identisch bedeutet hierbei, dass diese Steuerungen die gleiche Leistungsfähigkeit und in der Regel auch die gleiche Version der darauf laufenden Software aufweisen, sowohl was die interne Software (Firmware) anbelangt als auch bezogen auf das Anwenderprogramm, das die Anlage steuert. Man spricht hierbei auch von einer System-Redundanz, da neben dem identischen Programm auch die Daten zyklisch und vollständig zwischen den beiden Teil-Systemen synchronisiert werden.

Die Entwicklung derartiger hochverfügbarer Lösungen ist sehr kostenintensiv, wobei ein im Automatisierungsumfeld gewöhnlich eingesetztes H-System sich dadurch auszeichnet, dass zwei oder mehrere Teilsysteme in Form von Automatisierungsgeräten oder Rechnersystemen über eine Synchronisationsverbindung miteinander gekoppelt sind. Auf die an dieses H-System angeschlossenen Peripherieeinheiten können prinzipiell beide Teilsysteme lesend und/oder schreibend zugreifen. Eines der beiden Teilsysteme ist bezüglich der an das System angeschlossenen Peripherie führend. Dies bedeutet, dass Ausgaben zu Peripherieeinheiten bzw. Ausgangsinformation für diese Peripherieeinheiten nur von einem der beiden Teilsysteme durchgeführt werden, welches als Master arbeitet bzw. die Masterfunktion übernommen hat. Damit beide Teilsysteme synchron ablaufen können, werden diese über eine Synchronisationsverbindung in regelmäßigen Abständen synchronisiert. Bezüglich der Häufigkeit der Synchronisation und deren Umfang können verschiedene Ausprägungen unterschieden werden (warmstandby, hot-standby).

Aus dem Siemens-Katalog ST 70, Kapitel 6, Ausgabe 2011 ist ein redundantes, aus zwei Teilsystemen bestehendes Automatisierungssystem bekannt, welches dazu vorgesehen ist, die Verfügbarkeit einer zu steuernden Anlage zu erhöhen. Dieses Automatisierungssystem wird regelmäßig synchronisiert und es ist sichergestellt, dass der Ausfall eines dieser Teilsysteme sich nicht störend auf einen zu steuernden Prozess auswirkt, weil das andere Teilsystem die Ausführung bzw. die Bearbeitung des entsprechenden Teils ihres jeweiligen Steuerprogramms oder die Ausführung bzw. die Bearbeitung der entsprechenden Teile dieses Steuerprogramms fortsetzen kann.

Aus der EP 0 907 912 B1 ist ein Synchronisationsverfahren für ein aus zwei Teilsystemen aufgebautes Automatisierungssystem bekannt. Dieses Synchronisationsverfahren basiert auf einer zeitlich synchronen Kopplung der beiden Teilsysteme, wobei an geeigneten Programmstellen, an denen ein Abgleich vorgesehen ist, beide Teilsysteme auf eine Antwort des jeweils anderen Teilnehmers warten und erst dann jeweils ihre Programmverarbeitung zeitlich synchron fortsetzen.

In der EP 2 657 797 A1 ist ein Verfahren zum Betreiben eines redundanten Automatisierungssystem offenbart, das ein Synchronisationsverfahren beinhaltet.

Den bekannten Systemen ist die vollständige System-Redundanz gemein. Diese zieht jedoch entsprechend lange Synchronisierungszeiten nach sich. "Lange" bedeutet hierbei mittlere zwei- bis niedrige dreistellige Millisekunden-Bereiche.

Die bekannte vollständige System-Redundanz vereinfacht zwar das System-Design, weist jedoch Nachteile auf. Da immer alle Daten (bei großen Anlagen kann das die Größenordnung "Megabyte" bedeuten) synchronisiert werden müssen, lassen sich beispielsweise keine hochfrequenten Regler abbilden, die entsprechend hohe Synchronisierungsfrequenzen bedürfen.

Der Erfindung liegt daher die Aufgabe zugrunde, ein redundant ausgelegtes Automatisierungssystem anzugeben, das die zuvor genannten Nachteile vermeidet.

Diese Aufgabe wird durch ein redundant ausgelegtes Automatisierungssystem gemäß Anspruch 1 gelöst. Das erfindungsgemäße Automatisierungssystem weist ein erstes Teilsystem und ein zweites Teilsystem auf, wobei eines dieser Teilsysteme dazu ausgebildet ist, als Master zu arbeiten und das andere dieser Teilsysteme dazu ausgebildet ist, als Slave zu arbeiten, und wobei der Slave dazu ausgebildet ist, für den Fall, dass der Master ausfällt, die Funktion des Masters zu übernehmen.

In den beiden Teilsystemen des Automatisierungssystems ist jeweils ein Ablaufprogramm implementiert, das in einer Laufzeit-Umgebung ausführbar ist, um Automatisierungsaufgaben zu erfüllen. Zudem ist in beiden Teilsystemen des Automatisierungssystems jeweils ein Datenspeicher implementiert.

Das Ablaufprogramm weist wenigstens ein erstes Teilprogramm und ein zweites Teilprogramm auf, und der Datenspeicher weist jeweils wenigstens einen ersten Teilspeicher und einen zweiten Teilspeicher auf.

Das erfindungsgemäße Automatisierungssystem ist dadurch gekennzeichnet, dass dem ersten Teilprogramm der erste Teilspeicher und dem zweiten Teilprogramm der zweite Teilspeicher zugeordnet ist, und dass sich ein Synchronisationstakt des ersten Teilprogramms und des ersten Teilspeichers von einem Synchronisationstakt des zweiten Teilprograms und des zweiten Teilspeichers unterscheidet.

Automatisierungssysteme werden zur Realisierung einer Automatisierung benutzt und können beispielsweise speicherprogrammierbare Steuerungen sein, beispielsweise eine SIMATIC S7-400 der Firma SIEMENS, welche eine übergeordnete Steuerungsfunktion für untergeordnete Steuerungen, beispielsweise eine SIMATIC ET 200 der Firma SIEMENS, darstellt.

In dem applikationsgranularen, redundanten Automatisierungssystem bilden ein Teilprogramm (auch als "App" bezeichnet) und der dazugehörige Teilspeicher eine Einheit. Der Teilspeicher kann von dem Teilprogramm im Rahmen dessen Ausführung benötigte (Automatisierungs-)Daten enthalten, beispielsweise Prozessdaten. Erfindungsgemäß weisen wenigstens zwei Einheiten einen voneinander verschiedenen Synchronisationstakt auf. Während eine erste Einheit (erstes Teilprogramm und erster Teilspeicher) beispielsweise mit einem Synchronisationstakt von 10 ms zwischen den beiden Teilsystemen synchronisiert wird, kann der Synchronisationstakt des zweiten Teilprogramms und des zweiten Teilspeichers beispielsweise 50 ms betragen.

Bei einer angenommenen Datenmenge pro Teilprogramm in der Größenordnung einiger 100 Bytes oder weniger Kilobytes, und einer angenommenen Gigabit-Ethernet-Kopplung zwischen den beiden Teilsystemen, können 10kB Daten in ca. 20 Mikrosekunden übertragen werden. Selbst wenn die vollständige Synchronisation aus mehreren einzelnen Schritten besteht, sind bei dem erfindungsgemäßen Automatisierungssystem Synchronisierungstakte von weniger als 100 Mikrosekunden möglich.

Die Aufteilung eines großen Programms, das nur im Ganzen synchronisiert werden kann, in mehrere kleine Teilprogramme mit definierten zugehörigen (Daten-)Speichern, bringt eine Reihe an Vorteilen. Die einzelnen Teilprogramme können mit den jeweils passenden Aktualisierungszyklen getriggert werden, da diese jeweils spezifisch sind. Durch die partielle Synchronisierung mit dementsprechend kleinen Datenmengen können deutlich hochfrequentere Teilprogramme/Apps bis hin zu feldbussynchronen Reglern redundant realisiert werden.

Die Loslösung der Redundanz von dem bisher in klassischen Steuerungen vorliegenden IEC-61131 Kontext erlaubt auch die Verwendung anderer Programmiersprachen für hochverfügbare Teilprogramme.

Des Weiteren ist das Synchronisieren des zweiten Teilsystems an das bereits laufende erste Teilsystem bei Verwendung des erfindungsgemäßen Automatisierungssystems deutlich performanter, da jedes Teilprogramm einzeln synchronisiert werden kann. Bei bekannten Automatisierungssystemen müssen hingegen alle Teilprogramme/Daten mit einem einzigen, identischen Synchronisierungstakt synchronisiert werden, was bei entsprechender Datenmenge auch fehlschlagen kann, da sich die Daten fortlaufend ändern können. Da bei dem erfindungsgemäßen Automatisierungssystem aber der Teilspeicher (bzw. die darin enthaltenen Daten) eines Teilprogramms unmittelbar mit dem Synchronisierungstakt des Teilprogramms verbunden ist, kann dieser Fehler erst gar nicht auftreten.

Die einzelnen Teilprogramme müssen nicht in einem festen Zyklus laufen, sondern können auch event-basiert getriggert werden, z.B. durch Änderung einer Variablen durch ein anderes Teilprogramm. Die Ausführungsumgebung der Teilprogramme (die Laufzeit-Umgebung) liegt dabei die Information vor, welcher Teilspeicher bzw. welche Daten zu dem event-getriggerten Teilprogramm gehören. Damit können diese Daten bzw. diese Teilspeicher vor dem Starten des dazugehörigen Teilprogramms entsprechend zwischen den beiden Teilsystemen synchronisiert werden. Verwendet man hierzu eine separate Trigger-Variable, kann sich auch die Konsistenz aller anderen Variablen sicherstellen lassen, indem diese Trigger-Variable immer als letzte von dem anderen Teilprogramm geschrieben wird. Zusätzlich kann die Anzahl der Events erheblich reduziert werden, da nicht für jede einzelne Variablenänderung ein Trigger erzeugt wird musss, sondern nur für diese eine. Dieses Konzept ist an den Mechanismus der IEC-61499 angelehnt.

Bei einer vorteilhaften Weiterbildung der Erfindung sind jeweils ein Teilprogramm und ein dem Teilprogramm zugeordneter Teilspeicher in einem computerimplementierten Container enthalten. Unterstützt die eingesetzte Laufzeit-Umgebung die Kapselung einzelner Applikationen in Containern, so können auch redundante Teilprogramme gekapselt werden, da die Daten bzw. die zugeordneten Teilspeicher dieser Teilprogramme auch bei der Verwendung von Containern zentral abgelegt und verwaltet werden. Die Verwendung von Containern vereinfacht die eindeutige Zuordnung von Teilprogramm und Teilspeicher bzw. Daten, da die Container eine definierte Grenze um beides ziehen.

Bei einer bevorzugten Weiterbildung der Erfindung sind das erste Teilsystem und das zweite Teilsystem mittels einer expliziten Synchronisationsverbindung miteinander verbunden. Dabei wird unter einer expliziten Synchronisationsverbindung eine Datenverbindung verstanden, die ausschließlich für den Datenverkehr der Synchronisierungsmechanismen zwischen den beiden Teilsystemen verwendet wird. Da hiermit kein größeres Netzwerk aufgespannt werden muss, sondern nur eine Punkt-zu-Punkt-Verbindung, werden hier die Daten meist auf der untersten und damit schnellstmöglichen Ebene des Netzwerks übertragen (Schicht 2 im OSI-Schichten-modell).

Alternativ können das erste Teilsystem und das zweite Teilsystem mittels einer impliziten Synchronisationsverbindung miteinander verbunden sein. Unter einer impliziten Synchronisationsverbindung wird eine Datenverbindung verstanden, die nicht ausschließlich für den Datenverkehr der Synchronisierungsmechanismen zwischen den beiden Teilsystemen verwendet wird. Vorteil ist hierbei, dass der Systemaufbau einfacher gestaltet werden kann.

Bei einer weiteren Alternative sind das erste Teilsystem und das zweite Teilsystem mittels einer expliziten und mittels einer impliziten Synchronisationsverbindung miteinander verbunden. Ein bedeutender Vorteil dieser Kombination (in Verbindung mit den zuvor bereits erläuterten Merkmalen des erfindungsgemäßen Automatisierungssystems) liegt darin, dass Teilprogramme/Teilspeicher, die mit einem niedrigen Synchronisierungstakt synchronisiert werden müssen, über die implizite (langsamere) Verbindung synchronisiert werden können, um mehr Bandbreite auf der expliziten Verbindung für Teilprogramme/Teilspeicher mit höheren Synchronisierungstakten bereitstellen zu können.

Die Aufgabe wird zudem gelöst durch ein Verfahren gemäß Anspruch 6. Das Verfahren zum Betreiben eines redundant ausgelegten Automatisierungssystems, welches ein erstes Teilsystem und ein zweites Teilsystem aufweist, wobei eines dieser Teilsysteme als Master und das andere dieser Teilsysteme als Slave arbeitet und wobei für den Fall, dass der Master ausfällt, der Slave die Funktion des Masters übernimmt, wobei in den beiden Teilsystemen des Automatisierungssystems jeweils ein Ablaufprogramm implementiert ist, das in einer Laufzeit-Umgebung ausführbar ist, um Automatisierungsaufgaben zu erfüllen, und wobei in den beiden Teilsystemen des Automatisierungssystems jeweils ein Datenspeicher implementiert ist, wobei das Ablaufprogramm wenigstens ein erstes Teilprogramm und ein zweites Teilprogramm aufweist, und wobei der Datenspeicher jeweils wenigstens einen ersten Teilspeicher und einen zweiten Teilspeicher aufweist, ist erfindungsgemäß dadurch gekennzeichnet, dass das erste Teilprogramm und der erste Teilspeicher mit einem ersten Synchronisationstakt zwischen den beiden Teilsystemen synchronisiert werden, und das zweite Teilprogramm und der zweite Teilspeicher mit einem zweiten Synchronisationstakt zwischen den beiden Teilsystemen synchronisiert werden, wobei sich der erste Synchronisationstakt und der zweite Synchronisationstakt voneinander unterscheiden.

Bevorzugt ist auch im Rahmen des Verfahrens - analog zu dem Automatisierungssystem - jeweils ein Teilprogramm und ein dem Teilprogramm zugeordneter Teilspeicher in einem computerimplementierten Container enthalten.

Im Rahmen einer bevorzugten Weiterbildung des Verfahrens sind das erste Teilsystem und das zweite Teilsystem mittels einer expliziten und/oder einer impliziten Synchronisationsverbindung miteinander verbunden.

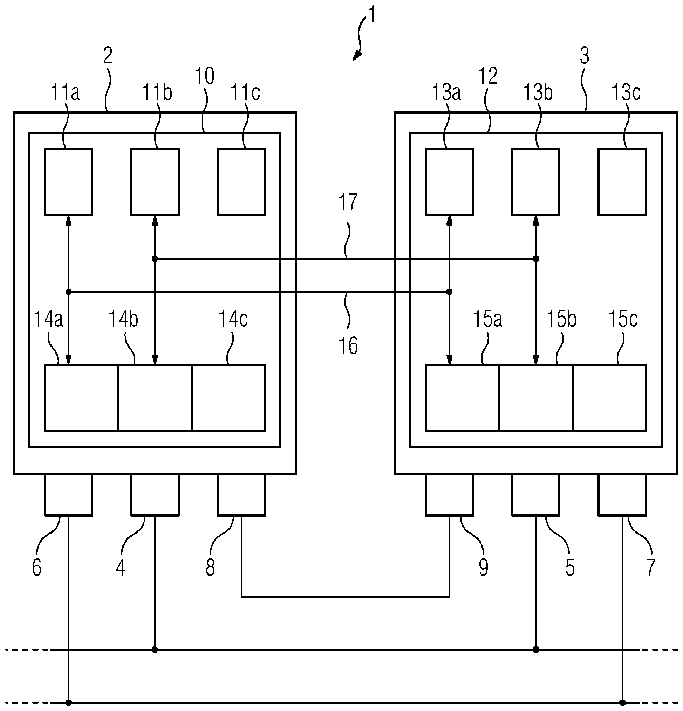

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung des Ausführungsbeispiels, das im Zusammenhang mit der Zeichnung näher erläutert wird.

In der Figur ist ein redundante ausgebildetes Automatisierungssystem 1 dargestellt. Das Automatisierungssystem 1 kann beispielsweise bei einer prozesstechnischen Anlage eingesetzt werden und weist ein erstes Teilsystem 2 und ein zweites Teilsystem 3 auf. Das erste Teilsystem weist eine erste Netzwerkschnittstelle 4, das zweite Teilsystem eine zweite Netzwerkschnittstelle 5 auf, über die die beiden Teilsysteme 2, 3 mit externen Geräten (nicht dargestellt) kommunizieren können. Dabei kann das redundante Automatisierungssystem 1 nach außen hin als nur ein einziger Netzwerkteilnehmer oder als zwei getrennte erscheinen - abhängig von der jeweiligen Implementierung.

Das erste Teilsystem 2 weist zudem eine erste Busschnittstelle 6 und das zweite Teilsystem 3 eine zweite Busschnittstelle 7 auf. Bei dem Bus kann es sich um einen Profinet-Feldbus handeln. An die beiden Busschnittstellen 6, 7 können Peripherie-Komponenten wie Sensoren oder Aktoren angeschlossen sein, um entsprechende Daten senden und empfangen zu können. In der Regel werden die Peripherie-Komponenten parallel an beide Busschnittstellen 6, 7 angeschlossen (wie dargestellt), damit bei Ausfall eines der beiden Teilsysteme 2, 3 das weiterlaufende Teilsystem 2,3 alle notwendigen Daten erhält. Teilweise können aber Peripherie-Komponenten auch nur an einem der beiden Teilsysteme 2, 3 angeschlossen sein, weil sie beispielsweise nur für dieses Teilsystem 2, 3 relevant sind - wie z.B. der Temperatursensor in einem Schaltschrank dieses Teilsystems 2, 3.

Darüber hinaus weist das erste Teilsystem 2 eine erste Synchronisationsschnittstelle 8 und das zweite Teilsystem 3 eine zweite Synchronisationsschnittstelle 9 auf. Die beiden Synchronisationsschnittstellen 8, 9 werden ausschließlich für den Datenverkehr im Rahmen einer Synchronisation der beiden Teilsysteme 2, 3 verwendet. Es handelt sich somit um eine reine Punkt-zu-Punkt-Verbindung, auf der Daten meist auf der untersten und damit schnellstmöglichen Ebene übertragen werden (d.h. in der Schicht 2 des OSI-Schichtenmodells).

In einer Laufzeitumgebung 10 des ersten Teilsystems 2 werden drei Teilprogramme 11a, 11b, 11c ausgeführt. Die einzelnen Teilprogramme 11a, 11b, 11c können dabei verschiedene Automatisierungsaufgaben abarbeiten, beispielsweise eine Regelung oder eine Überwachung von mit dem ersten Teilsystem 2 über die Busschnittstelle 6 verbundenen Sensoren und/oder Aktoren. Analog dazu werden in einer Laufzeitumgebung 12 des zweiten Teilsystems 3 drei Teilprogramme 13a, 13b, 13c ausgeführt.

In dem ersten Teilsystem 2 ist weiterhin ein Speicher implementiert, der drei Teilspeichern 14a, 14b, 14c umfasst. Jeder der Teilspeicher 14a, 14b, 14c ist einem der Teilprogramme 11a, 11b, 11c des ersten Teilsystems 2 zugeordnet. In den Teilspeichern 14a, 14b, 14c befinden sich Daten, die jeweils von an das erste Teilsystem 2 über die Busschnittstelle 6 angeschlossenen Peripherie-Komponenten oder von dem zugeordneten Teilprogramm 11a, 11b, 11c stammen. Analog dazu weist das zweite Teilsystem 3 drei Teilspeicher 15a, 15b, 15c auf, die analog ausgebildet sind.

In den Laufzeitumgebungen 10, 12 sind die Zuordnungen der einzelnen Teilprogramme 11a, 11b, 11c, 13a, 13b, 13c zu den jeweiligen Teilspeichern 14a, 14b, 14c, 15a, 15b, 15c hinterlegt. Das dritte Teilprogramm 11c, 13c bzw. der dazugehörige dritte Teilspeicher 14c, 15c werden nicht zwischen den beiden Teilsystemen 2, 3 synchronisiert. Für die Kombination der ersten Teilprogramme 11a, 13a und der ersten Teilspeicher 14a, 15a wird ein erster logischer Synchronisationskanal 16 definiert. Für die Kombination der zweiten Teilprogramme 11b, 13b und der zweiten Teilspeicher 14b, 15b wird ein zweiter logischer Synchronisationskanal 17 definiert. Ein Synchronisationstakt des ersten Synchronisationskanals 16 und ein Synchronisationstakt des zweiten Synchronisationskanals 17 sind voneinander verschieden.

Die Kopplung zwischen den beiden Teilprogrammen 11a, 11b, 13a, 13b ist aufgrund der fehlenden Korrelation der Synchronisationstakte asynchron. Wenn das erste Teilprogramm 11a, 13a Ausgangsdaten hat, die von dem zweiten Teilprogramm 11b, 13b weiterverarbeitet werden, liegen diese nach dem Synchronisieren der beiden ersten Teilprogramme 11a, 13a (bzw. ersten Teilspeicher 14a, 15a) vor. Konkret bedeutet dies, dass die Daten erst in dem zweiten Teilprogramm 11b, 13b vorliegen, nachdem ein Ausführungszyklus des ersten Teilprogramms 11a, 13a, in dem eine Änderung vorgenommen wurde, beendet wurde, da erst am Ende dieses Ausführungszyklus die Daten ausgegeben und zu Beginn des folgenden Ausführungszyklus synchronisiert werden.

Die einzelnen Teilprogramme 11a, 11b, 13a, 13b können mit den jeweils passenden Ausführungszyklen getriggert werden, da diese jeweils spezifisch sind. Durch die beschriebene partielle Synchronisierung mit dementsprechend kleinen Datenmengen können deutlich hochfrequentere Programme bis hin zu Feldbussynchronen Reglern redundant realisiert werden.

## Patentansprüche

1. Redundant ausgelegtes Automatisierungssystem (1), welches ein erstes Teilsystem (2) und ein zweites Teilsystem (3) aufweist, wobei eines dieser Teilsysteme (2, 3) dazu ausgebildet ist, als Master zu arbeiten und das andere dieser Teilsysteme (2, 3) dazu ausgebildet ist, als Slave zu arbeiten, und wobei der Slave dazu ausgebildet ist, für den Fall, dass der Master ausfällt, die Funktion des Masters zu übernehmen,
wobei in den beiden Teilsystemen (2, 3) des Automatisierungssystems (1) jeweils ein Ablaufprogramm implementiert ist, das in einer Laufzeitumgebung (10, 12) ausführbar ist, um Automatisierungsaufgaben zu erfüllen,
und wobei in den beiden Teilsystemen (2, 3) des Automatisierungssystems (1) jeweils ein Datenspeicher implementiert ist, wobei das Ablaufprogramm wenigstens ein erstes Teilprogramm (11a, 13a, 11b, 13b, 11c, 13c) und ein zweites Teilprogramm (11a, 13a, 11b, 13b, 11c, 13c) aufweist,
und wobei der Datenspeicher jeweils wenigstens einen ersten Teilspeicher (14a, 15a, 14b, 15b, 14c, 15c) und einen zweiten Teilspeicher (14a, 15a, 14b, 15b, 14c, 15c) aufweist,
**dadurch gekennzeichnet, dass**
dem ersten Teilprogramm (11a, 13a, 11b, 13b, 11c, 13c) der erste Teilspeicher (14a, 15a, 14b, 15b, 14c, 15c) und dem zweiten Teilprogramm (11a, 13a, 11b, 13b, 11c, 13c) der zweite Teilspeicher (14a, 15a, 14b, 15b, 14c, 15c) zugeordnet ist,
und dass sich ein Synchronisationstakt des ersten Teilprogramms (11a, 13a, 11b, 13b, 11c, 13c) und des ersten Teilspeichers (14a, 15a, 14b, 15b, 14c, 15c) von einem Synchronisationstakt des zweiten Teilprograms (11a, 13a, 11b, 13b, 11c, 13c) und des zweiten Teilspeichers (14a, 15a, 14b, 15b, 14c, 15c) unterscheidet.

2. Redundant ausgelegtes Automatisierungssystem (1) nach Anspruch 1, bei dem jeweils ein Teilprogramm (11a, 13a, 11b, 13b, 11c, 13c) und ein dem Teilprogramm (11a, 13a, 11b, 13b, 11c, 13c) zugeordneter Teilspeicher (14a, 15a, 14b, 15b, 14c, 15c) in einem computerimplementierten Container enthalten sind.

3. Redundant ausgelegtes Automatisierungssystem (1) nach Anspruch 1 oder 2, bei dem das erste Teilsystem (2) und das zweite Teilsystem (3) mittels einer expliziten Synchronisationsverbindung miteinander verbunden sind.

4. Redundant ausgelegtes Automatisierungssystem (1) nach Anspruch 1 oder 2, bei dem das erste Teilsystem (2) und das zweite Teilsystem (3) mittels einer impliziten Synchronisationsverbindung miteinander verbunden sind.

5. Redundant ausgelegtes Automatisierungssystem (1) nach Anspruch 1 oder 2, bei dem das erste Teilsystem (2) und das zweite Teilsystem (3) mittels einer impliziten Synchronisationsverbindung und mittels einer expliziten Synchronisationsverbindung miteinander verbunden sind.

6. Verfahren zum Betreiben eines redundant ausgelegten Automatisierungssystems (1), welches ein erstes Teilsystem (2) und ein zweites Teilsystem (3) aufweist, wobei eines dieser Teilsysteme (2,3) als Master und das andere dieser Teilsysteme (2, 3) als Slave arbeitet und wobei für den Fall, dass der Master ausfällt, der Slave die Funktion des Masters übernimmt,
wobei in den beiden Teilsystemen (2, 3) des Automatisierungssystems (1) jeweils ein Ablaufprogramm implementiert ist, das in einer Laufzeitumgebung (10, 12) ausführbar ist, um Automatisierungsaufgaben zu erfüllen,
und wobei in den beiden Teilsystemen (2, 3) des Automatisierungssystems (1) jeweils ein Datenspeicher implementiert ist, wobei das Ablaufprogramm wenigstens ein erstes Teilprogramm (11a, 13a, 11b, 13b, 11c, 13c) und ein zweites Teilprogramm (11a, 13a, 11b, 13b, 11c, 13c) aufweist,
und wobei der Datenspeicher jeweils wenigstens einen ersten Teilspeicher (14a, 15a, 14b, 15b, 14c, 15c) und einen zweiten Teilspeicher (14a, 15a, 14b, 15b, 14c, 15c) aufweist,
**dadurch gekennzeichnet, dass**
das erste Teilprogramm (11a, 13a, 11b, 13b, 11c, 13c) und der erste Teilspeicher (14a, 15a, 14b, 15b, 14c, 15c) mit einem ersten Synchronisationstakt zwischen den beiden Teilsystemen (2, 3) synchronisiert werden, und das zweite Teilprogramm (11a, 13a, 11b, 13b, 11c, 13c) und der zweite Teilspeicher (14a, 15a, 14b, 15b, 14c, 15c) mit einem zweiten Synchronisationstakt zwischen den beiden Teilsystemen (2, 3) synchronisiert werden, wobei sich der erste Synchronisationstakt und der zweite Synchronisationstakt voneinander unterscheiden.

7. Verfahren nach Anspruch 6, bei dem jeweils ein Teilprogramm (11a, 13a, 11b, 13b, 11c, 13c) und ein dem Teilprogramm (11a, 13a, 11b, 13b, 11c, 13c) zugeordneter Teilspeicher (14a, 15a, 14b, 15b, 14c, 15c) in einem computerimplementierten Container enthalten sind.

8. Verfahren nach Anspruch 6 oder 7, bei dem das erste Teilsystem (2) und das zweite Teilsystem (3) mittels einer expliziten Synchronisationsverbindung miteinander verbunden sind.

9. Verfahren nach Anspruch 6 oder 7, bei dem das erste Teilsystem (2) und das zweite Teilsystem (3) mittels einer impliziten Synchronisationsverbindung miteinander verbunden sind.

10. Verfahren nach Anspruch 6 oder 7, bei dem das erste Teilsystem (2) und das zweite Teilsystem (3) mittels einer impliziten Synchronisationsverbindung und mittels einer expliziten Synchronisationsverbindung miteinander verbunden sind.
